# FASCICULE DE BREVET EUROPEEN

(11) **EP 0 713 909 B1**
(45) Date de publication et mention de la délivrance du brevet: **26.09.2001**
(21) Numéro de dépôt: 95402622.5
(22) Date de dépôt: 21.11.1995
(51) Int. Cl.: C10M 169/04, C09K 7/00

(54) **Composition lubrifiante comportant un ester - utilisation de la composition et fluide de puits comportant la composition**
Ester enthaltende schmierölzusammensetzung, Verwendung dieser Zusammensetzung und diese enthaltende Bohrlochflüssigkeiten
Lubricating oil composition containing an ester, use thereof and well bore fluids containing the same

(30) Priorité: 22.11.1994 FR 9414254
(43) Date de publication de la demande: 29.05.1996
(73) Titulaire: INSTITUT FRANCAIS DU PETROLE, 92500 Rueil Malmaison (FR); ATOFINA Research, 7181 Seneffe (Feluy) (BE)
(72) Inventeur: Argillier, Jean-François, F-92150 Suresnes (FR); Audibert, Annie, F-78290 Croissy sur Seine (FR); Marchand, Pierre, F-78630 Orgeval (FR); Demoulin, André, F-5998 Beauchevain (BE); Janssen, Michel, F-1970 Wezelbeej-Oppem (BE)

(56) Documents cités:
- EP-A- 0 398 113
- EP-A- 0 464 491
- WO-A-94/07973
- FR-A- 2 289 601
- GB-A- 2 077 327
- DATABASE WPI Week 9425 Derwent Publications Ltd., London, GB; AN 94-207669 & SU-A-1 808 861 (MOSC GUBKIN OIL GAS INST)
- DATABASE WPI Week 8946 Derwent Publications Ltd., London, GB; AN 89-338522 & SU-A-1 481 252 (UFA PETROLEUM INST)

## Description

La présente invention concerne des compositions lubrifiantes pour des fluides utilisés pour le forage ou le conditionnement de puits ou les interventions dans des puits. Plus particulièrement, l'invention décrit un procédé et une composition pour contrôler le pouvoir lubrifiant des fluides à base d'eau placés dans des puits forés.

La méthode conventionnelle de forage de puits, pétroliers ou non, consiste à entraîner en rotation un outil à dents fixé à l'extrémité d'une colonne de tiges de forage, la colonne étant généralement entraînée en rotation par une installation de surface. Un fluide, appelé fluide ou boue de forage, est injecté au niveau de l'outil par l'espace intérieur des tiges. Les fonctions principales de ce fluide sont : de nettoyer l'outil et le puits en remontant les débris vers la surface, de stabiliser les parois du puits, d'inhiber les réactions des formations géologiques en contact avec le fluide, etc...

La présente invention ne concerne pas uniquement les fluides dits de forage, mais également les fluides dits de "complétion", ainsi que les fluides dits d'intervention ("workover"), l'ensemble de ces fluides étant appelé ci-après fluides de puits. La complétion est une opération qui poursuit l'opération de forage lorsque le puits atteint la formation productrice. La complétion consiste notamment à forer dans la roche réservoir, tester la formation, équiper le puits pour la production, mettre en production. Pour ces opérations, le fluide de complétion peut être spécifique notamment à la roche réservoir et aux effluents produits. Les opérations de "workover" ou d'intervention consistent à travailler dans un puits producteur pour forer, reforer, nettoyer le puits, ou changer des équipements.

Les fluides de puits doivent pouvoir avoir des caractéristiques ajustées en fonction des utilisations très variées, notamment leur viscosité, leur masse volumique ou leur capacité de contrôle du filtrat. Dans certains cas de puits très fortement déviés, par exemple des forages horizontaux, ou plus généralement des puits qui procurent des frottements importants sur les tubulaires descendus dans le puits, la capacité lubrifiante du fluide devient une caractéristique importante.

On connaît les documents US-A-4964615 et US-A-5318956 qui décrivent l'utilisation d'esters d'origine végétale dans un mélange pour fluide de forage. Mais aucun de ces documents ne concerne la composition optimisée selon la présente invention.

GB-A-2077 327 décrit aussi un fluide de forage contenant des esters d'acide insaluré.

Ainsi, la présente invention concerne une composition lubrifiante pour fluide de puits. Elle comporte :
- de 50% à 99% en poids d'une partie A constituée par un ou plusieurs esters obtenus par réaction d'un acide monocarboxylique (A.1), linéaire ou branché, comprenant de 8 à 24 atomes de carbone et d'un polyol (A.2), linéaire ou branché, comprenant de 2 à 20 atomes de carbone,
- de 1 à 50% en poids d'une partie B constituée d'un ou plusieurs acides monocarboxyliques, linéaires ou branchés, comprenant de 8 à 24 atomes de carbone.

Le polyol A.2 peut être par exemple, le néopentylglycol, le pentaérythritol, le dipentaérythritol, le triméthylolpropane et le ditriméthylolpropane.

L'acide monocarboxylique (A.1 et partie B) peut posséder 1 à 3 insaturations et comprend 14 à 20 atomes de carbone.

Le polyol A.2 peut posséder 2 à 5 groupements hydroxyles et comprendre de 2 à 6 atomes de carbone. De préférence, le polyol peut posséder 4 groupements hydroxyles.

L'acide monocarboxylique (A.1 et partie B) peut être choisi parmi le groupe constitué par l'acide oléique, stéarique, linoléique, linolénique, palmitique, palmitoléique, myristique, et leur mélange. La composition peut comporter entre 5 et 20% de la partie B, préférentiellement environ 10%.

Le rapport molaire acide : alcool (A.1 : A.2) peut être compris entre 1 : 1 et (n-n/10) : 1, de préférence compris entre (1+n/10) : 1 et (n-n/5) : 1, où n représente le nombre de groupements hydroxyles de l'alcool A.2.

La composition peut comporter entre 80 et 95% d'ester A, préférentiellement environ 90%.

La composition peut comporter en outre au plus 10% en poids d'amine tertiaire.

L'amine tertiaire peut être une triéthanolamine.

L'amine peut être en quantité comprise entre 0,2 et 1,2 exprimée en équivalents molaire par rapport à l'acide B.

La partie ester A, la partie acide B et la triéthanolamine peuvent être respectivement dans les proportions en poids suivantes : environ 85,4%, 9,5% et 5,1%.

La composition peut comporter un produit émulsifiant dans une proportion au plus égale à 2% en poids par rapport à la composition.

Le produit émulsifiant peut être choisi dans le groupe formé par du RADIASURF 7137 (Monolaurate de sorbitan éthoxylé à 20 moles) et le RADIASURF 7404 (polyéthylène glycol de masse moléculaire 600).

L'invention concerne également une utilisation de la composition selon l'invention pour le contrôle de la capacité lubrifiante d'un fluide de puits à base d'eau.

Dans l'utilisation, la quantité ajoutée de ladite composition peut être comprise entre environ 0,1% et 10%, par rapport au fluide.

Dans le cas où le fluide de puits est un fluide très peu chargé en solides réactifs, la quantité ajoutée de ladite composition peut être comprise entre environ 1% et 3%, par rapport au fluide.

Dans le cas où le fluide est chargé en solides, la quantité ajoutée de ladite composition peut être comprise entre environ 3% et 5%, par rapport au fluide.

L'invention concerne également un fluide de puits à base d'eau comprenant entre 0,1 et 10%, préférentiellement entre 1 et 5%, en poids d'une composition lubrifiante telle que définie dans la présente invention.

La demanderesse a trouvé que la combinaison des esters et des acides dans les proportions définies conformément à la présente invention conduisent à des compositions lubrifiantes particulièrement appropriées lors de leur utilisation dans les fluides de puits à base d'eau.

Conformément à un autre mode d'exécution de la présente invention, la demanderesse a trouvé que l'on pouvait encore améliorer certaines propriétés physiques des fluides à base d'eau lorsqu'on incorporait jusqu'à 10% en poids (par rapport à la composition lubrifiante) d'une ou plusieurs amines tertiaires à la composition lubrifiante.

Conformément à un autre mode d'exécution de la présente invention, la demanderesse a trouvé que l'addition jusqu'à 2% en poids (par rapport à la composition lubrifiante) d'un produit émulsifiant permettait souvent d'améliorer les propriétés de stabilité de la composition finale.

Il faut noter que les réglementations relatives à la protection de l'environnement imposent de plus en plus que les différents additifs utilisés dans la formulation des fluides de puits soient non toxiques et non polluants vis-à-vis de l'environnement.

La composition lubrifiante de la présente invention a notamment l'avantage de répondre aux critères actuels relatifs à la protection de l'environnement.

De plus, la présente composition peut être utilisée avec tous les fluides de puits à base d'eau, par exemple, les fluides bentonitiques alourdis ou non, les fluides hautes pressions/hautes températures (HP/HT), les fluides sans solide, etc...

L'invention sera mieux comprise et ses avantages apparaîtront plus nettement à lecture des exemples suivants, nullement limitatifs.

Le pouvoir lubrifiant d'une composition lubrifiante selon l'invention est testé à l'aide d'un "Lubricity tester-Model 212" fabriqué par la société NL Baroid Petroleum Services (Instruction Manual Part No.211210001EA). Les tests ("Lubricity-surface to surface) sont effectués selon les procédures recommandées par la norme RP 13B de l'American Petroleum Institute (API), (100 psi (689 kPa) à 60 tours/minute). Pour comparer les capacités lubrifiantes des différentes compositions, on a relevé les lectures des graduations obtenues avec l'appareil de test ci-dessus décrit. Ces lectures correspondent à des valeurs relatives du couple de frottement. Plus ces valeurs lues sont faibles, meilleur est le pouvoir lubrifiant de la composition testée.

Le principe des exemples ci-après est de mélanger, à un fluide de base, une certaine quantité d'une composition lubrifiante déterminée, le mélange étant ensuite testé dans l'appareillage. Les essais, sauf avis contraire, ont été réalisés à température ambiante (environ 25°C).

Les compositions lubrifiantes ci-après testées sont définies par la nomenclature suivante :
L1 correspond à l'ester **monooléate de pentaérythritol** seul, commercialisé par la société FINA sous le nom de RADIASURF 7156.
L2 correspond au mélange en poids de **monooléate de pentaérythritol** et d'acide **Radiacid 208** dans les proportions respectives de **85%** et **15%**. Le Radiacid 208, commercialisé par la société FINA contient environ 70% d'acide oléique, 10% d'acide linoléique, 6% d'acide palmitoléique, 5% d'acide palmitique, 4% d'acide myristique, 3% d'acide linolénique et 2% d'acide stéarique.
L3 correspond à un lubrifiant commercial :"MI-LUBE" commercialisé par la société M.I. (USA).
L4 correspond à un lubrifiant commercial :"LUBRISAL" commercialisé par la société MILLPARK (USA)).
L5 correspond au gasoil.
L6 correspond à un mélange de **monooléate de pentaérythritol et de triéthanolamine** dans les proportions respectives de **90% et 10%.**
L7 correspond au mélange en poids de **monooléate de pentaérythritol**, de **Radiacid 208** et de **triéthanolamine** dans les proportions respectives de 85,4%, 9,5% et 5,1%.
L8 correspond au mélange en poids de **monooléate de pentaérythritol** et de **Radiacid 208** dans les proportions respectives de **90%** et **10%.**
L9 correspond à l'ester **2-éthyl-hexyl oléate.**
L10 correspond au mélange en poids **2-éthyl-hexyl oléate** et de **Radiacid 208** dans les proportions respectives de **85%** et **15%.**
L11 correspond au mélange en poids de **2-éthyl-hexyl oléate** et de **Radiacid 208** dans les proportions respectives de **90%** et **10%.**
L12 correspond au mélange en poids de **2-éthyl-hexyl oléate** et de **Radiacid 208** dans les proportions respectives de **95%** et **5%.**
L13 correspondant au système **L7** auquel on a ajouté 0,15% en poids d'émulsifiant **RADIASURF 7137** (Monolaurate de sorbitan éthoxylé à 20 moles) commercialisé sous ce nom par la société FINA.
L14 correspondant au système L13 dans lequel l'émulsifiant est remplacé par le **RADIASURF 7404** (Monooléate de polyéthylène de masse moléculaire 600) commercialisé sous ce nom par la société FINA.

L2, L7, L8, L13 et L14 correspondent à des compositions lubrifiantes préférées selon l'invention.

### Exemple 1: Cas d'un fluide classique à l'eau douce

Composition du fluide de base:
- eau douce
- bentonite du Wyoming 30 g/l
- viscosifiant (Xanthane) 2 g/l
- réducteur de filtrat (AQUAPAC Reg) 1 g/l
- dispersant (Polyacrylate ) 3 g/l
- NaOH tel que pH=9

Le dispersant est du polyacrylate FP 30S commercialisé par la société COATEX (France).

Le produit AQUAPAC Regular est commercialisé par la société AQUALON.

Le xanthane utilisé pour tous les tests est de l'IDVIS commercialisé par la société Dowell Drilling Fluids.

On compare dans cet exemple les performances lubrifiantes de différents systèmes:
le gasoil (L5), deux lubrifiants commerciaux classiques (L3, L4) et deux systèmes L1 et L2 à base d'un ester tel que définit ci-dessus.

Les différents systèmes sont ajoutés au fluide de base qui est alors mélangé puis testé.

| | **Lecture du couple** | | | | |
|---|---|---|---|---|---|
| Fluide base | 50 | | | | |
| **Systèmes** | **L1** | **L2** | **L3** | **L4** | **L5** |
| (%) | | | | | |
| 0,5 | | 3 | 39 | 50 | 50 |
| 1 | 4 | 2 | 33 | 7 | 50 |
| 2 | 4 | 1 | 6 | 7 | 50 |
| 3 | 4 | 1 | 5 | 7 | 50 |
| 4 | 4 | 1 | 4 | 7 | 50 |
| 5 | 4 | 1 | 4 | 7 | 50 |

Les résultats montrent les bonnes performances du système (L2) comportant deux constituants selon l'invention. On peut noter que le gasoil (L5) a comparativement une propriété lubrifiante très médiocre.

### Exemple 2 : Fluide classique au potassium

Composition du fluide de base :
- eau douce
- bentonite du Wyoming 30 g/l
- viscosifiant (Xanthane) 2 g/l
- réducteur de filtrat (AQUAPAC Reg) 1 g/l
- dispersant (Polyacrylate FP 30S) 3 g/l
- KCl 50 g/l
- NaOH tel que pH=9

Dans cet exemple, on compare les performances lubrifiantes des systèmes identiques à ceux de l'exemple 1.

| | **Lecture du couple** | | | | |
|---|---|---|---|---|---|
| Fluide de base | 44 | | | | |
| **Systèmes** | **L1** | **L2** | **L3** | **L4** | **L5** |
| (%) | | | | | |
| 1 | 44 | 44 | 44 | 44 | 44 |
| 3 | 37 | 10 | 6 | 50 | 44 |
| 4 | 19 | 8 | 6 | 50 | 44 |
| 5 | 7 | 3 | 6 | 50 | 44 |

On observe, pour un fluide au KCl, que l'addition de gasoil ou du lubrifiant L4 n'améliore pas les propriétés lubrifiantes. Le système L1 base d'ester seul est efficace à partir de 4%. Le système L2 et le lubrifiant commercial L3 sont les plus performants à partir d'une concentration d'environ 2,5%.

Cet exemple montre le rôle de l'acide Radiacid 208 dans la composition à base d'ester.

### Exemple 3 : Fluide classique en présence de chlorure de sodium

Composition du fluide de base :
- eau douce
- bentonite du Wyoming 30 g/l
- viscosifiant (Xanthane) 2 g/l
- réducteur de filtrat (AQUAPAC Reg) 1 g/l
- dispersant (Polyacrylate FP 30S) 3 g/l
- NaCl 50 g/l
- NaOH tel que pH=9

On compare dans cet exemple les performances lubrifiantes des systèmes L1, L2 et L3.

Les mesures sont reportées sur le tableau ci-dessous :

| | **Lecture du couple** | | |
|---|---|---|---|
| Fluide de base | 42 | | |
| **Systèmes** | **L1** | **L2** | **L3** |
| (%) | | | |
| 0,5 | 42 | 5 | 42 |
| 1 | 42 | 2 | 42 |
| 2 | 42 | 2 | 42 |
| 3 | 38 | 2 | 14 |
| 4 | 14 | 1 | 4 |
| 5 | 5 | 1 | 4 |

Ces résultats montrent les très bonnes performances du système à deux constituants L2 en présence de chlorure de sodium.

### Exemple 4: Fluide classique à l'eau de mer

Composition du fluide de base :
- eau de mer
- bentonite du Wyoming 30 g/l
- viscosifiant (Xanthane) 2 g/l
- réducteur de filtrat (AQUAPAC Reg) 1 g/l
- dispersant (polyacrylate FP 30S) 3 g/l
- NaOH tel que pH=9

L'eau de mer synthétique utilisée est constituée de NaCl (28 g/l), MgCl₂. 6 H₂O (4,8 g/l), CaCl₂ (1,2 g/l), KCl (1,3 g/l), MgSO₄. 7 H₂O (7,2 g/l).

On compare dans cet exemple les performances lubrifiantes des systèmes L1, L2, L3, L4 et L5.

Les mesures sont reportées sur le tableau ci-dessous :

| | **Lecture du couple** | | | | |
|---|---|---|---|---|---|
| Fluide base | 44 | | | | |
| **Systèmes** | **L1** | **L2** | **L3** | **L4** | **L5** |
| (%) | | | | | |
| 0,5 | 44 | 41 | 44 | 44 | 44 |
| 1 | 41 | 2 | 42 | 44 | 44 |
| 2 | 38 | 2 | 42 | 44 | 44 |
| 3 | 37 | 2 | 38 | 44 | 43 |
| 5 | 37 | 1 | 37 | 43 | 42 |
| 5 | 9 | 1 | 36 | 42 | 42 |

Les lubrifiants commerciaux L3, L4, ainsi que le gasoil L5, sont peu efficaces avec cette formulation à l'eau de mer. On constate que le système L1 est efficace à partir de 5% alors que le système à deux constituants L2 est très performant dès son addition à la concentration de 1% dans la formulation.

### Exemple 5: Fluide classique en présence de CaCl₂

Composition du fluide de base :
- eau douce
- bentonite du Wyoming 30 g/l
- viscosifiant (Xanthane) 2 g/l
- réducteur de filtrat (AQUAPAC Reg) 1 g/l
- dispersant (polyacrylate FP 30S) 3 g/l
- CaCl₂ 50 g/l
- NaOH tel que pH=9

On compare dans cet exemple les performances lubrifiantes des différents systèmes: L3, L1, L2, L7, et L6.

| | **Lecture du couple** | | | | |
|---|---|---|---|---|---|
| Fluide de base | 42 | | | | |
| **Systèmes** | **L1** | **L2** | **L3** | **L6** | **L7** |
| (%) | | | | | |
| 0,5 | 40 | 40 | 42 | 41 | 32 |
| 1 | 38 | 38 | 42 | 39 | 6 |
| 2 | 36 | 36 | 42 | 38 | 2 |
| 3 | 36 | 20 | 42 | 36 | 2 |
| 4 | 6 | 2 | 42 | 34 | 2 |
| 5 | 5 | 2 | 42 | 14 | 2 |

Ces résultats montrent que pour cette formulation contenant du CaCl₂, l'ester seul L1 n'est pas très efficace. Le mélange L2 est plus performant, mais la combinaison des trois produits L7 donne les meilleurs résultats. Par comparaison, le lubrifiant commercial L3 est très peu performant. L'addition de triéthanolamine à l'ester seul (L6) n'améliore pas sensiblement les résultats. Les combinaisons les plus performantes sont ester+acide Radiacid 208 et ester+acide Radiacid 208+triéthanolamine.

### Exemple 6: Influence de la concentration en triéthanolamine dans le mélange

On teste l'influence du rapport des concentrations molaires triéthanolamine/acide Radiacid 208 dans le mélange lubrifiant. La formulation du fluide de base avec laquelle les systèmes sont testés correspond à la formulation de l'exemple 5.

Le système lubrifiant de base est constitué du mélange L8 de monooléate de pentaérythritol/acide dans les proportions respectives de 90 : 10. On ajoute à ce système de base une certaine concentration de triéthanolamine exprimée en équivalent molaire par rapport à l'acide. Les systèmes correspondent donc aux suivants:
L8.0: monooléate de pentaérythritol /acide 90 : 10
L8.1: L8.0 + 0.2 équivalent molaire de Triéthanolamine (TEA)
L8.2: L8.0 + 0.8 équivalent de (TEA)
L8.3: L8.0 + 1.0 équivalent TEA
L8.5: L8.0 + 1.2 équivalent TEA
L8.6: L8.0 + 1.4 équivalent TEA

Notons que le mélange L8.3 correspond au mélange L7.

| | **Lecture du couple** | | | | | |
|---|---|---|---|---|---|---|
| **Systèmes** | L8.0 | L8.1 | L8.2 | L8.3 | L8.5 | L8.6 |
| **(%)** | | | | | | |
| **1** | 39 | 34 | 26 | 6 | 12 | 39 |
| **2** | 37 | 32 | 4 | 2 | 10 | 14 |

Ces résultats mettent en évidence un effet synergétique de la TEA et de l'acide.

Ces résultats montrent que les performances semblent optimales lorsque les rapports molaires en acide et en triéthanolamine sont voisins. De plus, une trop forte concentration en TEA par rapport à l'acide fait diminuer l'effet synergétique de l'acide et de l'ester.

La triéthanolamine (ou autre amine tertiaire) présente également l'avantage de diminuer l'effet corrosif de l'acide (par exemple oléique) dans la composition.

### Exemple 7: Influence de la présence de solides dans la formulation

On étudie dans cet exemple, l'influence sur les propriétés lubrifiantes de l'addition de baryte dans la formulation. La baryte a pour fonction d'augmenter la masse volumique de la boue. On simule également la présence de déblais par l'addition de kaolinite et d'argile de charge (FGN) dans la formulation.

Le système lubrifiant testé est L7.

La formulation du fluide de base est la formulation de l'exemple 4.

A cette formulation de base, on ajoute, suivant les cas, de la baryte jusqu'à obtenir une densité de 1,4, de la kaolinite 50 g/l ou des argiles de charge 50 g/l.

| | **Lecture du couple** | | | | | | |
|---|---|---|---|---|---|---|---|
| **Système L7 (%)** | **0** | **0,5** | **1** | **2** | **3** | **4** | **5** |
| | | | | | | | |
| **Fluide de base** | 44 | 4 | 2 | 2 | 1 | 1 | 1 |
| **+baryte (d=1,4)** | 44 | 41 | 38 | 2 | 2 | 2 | 1 |
| **+kaolinite** | 44 | 42 | 2 | 2 | 2 | 2 | 1 |
| **+FGN** | 44 | 41 | 38 | 28 | 1 | 1 | 1 |
| **+baryte+kaolin.** | 44 | 40 | 30 | 2 | 2 | 2 | 1 |
| **+baryte+FGN** | 44 | 41 | 38 | 33 | 1 | 1 | 1 |

FGN est une argile de charge commercialisée par la société CKS.

La présence de solides dans la formulation nécessite une plus forte quantité de système lubrifiant, mais à partir de 3%, les résultats restent excellents. En effet, on sait que la présence de solides dans une formulation aqueuse diminue fortement les performances des systèmes lubrifiants. On sait que de très nombreux systèmes lubrifiants commerciaux sont peu, voire pas efficaces dans des formulations de fluides fortement densifiées.

Cet essai montre que l'exemple L7 de la composition lubrifiante présente d'excellentes propriétés lubrifiantes dans des fluides chargés en solides, dans la mesure où l'on ajuste la proportion de ladite composition par rapport au fluide de base, en particulier compte tenu des types et quantités des solides présents.

### Exemple 8: Formulation haute pression/haute température

Composition du fluide de base:
- eau douce
- bentonite du Wyoming 19 g/l
- viscosifiant minéral (Thermavis) 4.2 g/l
- réducteur de filtrat (Thermacheck) 6 g/l
- dispersant (Thermathin) 19 g/l
- argile de charge (FGN) 50 g/l
- baryte tel que d=1,4 (525 g/l)

Les produits Thermavis, Thermacheck et Thermathin sont commercialisés par la société BAROID (USA). Cette formulation est proposée pour des forages dits "HP/HT".

On compare avec cette formulation les performances lubrifiantes des différents systèmes L5, L3, L4, L1, L2, L7, L8, L9, L11, et L12.

Les résultats sont les suivants:

| | **Lecture du couple** | | | | | | |
|---|---|---|---|---|---|---|---|
| **Systèmes (%)** | **0** | **0,5** | **1** | **2** | **3** | **4** | **5** |
| | | | | | | | |
| **L1** | 39 | 39 | 39 | 38 | 37 | 36 | 34 |
| **L2** | 39 | 37 | 4 | 2 | 2 | 2 | 2 |
| **L3** | 39 | 38 | 38 | 38 | 10 | 1 | 1 |
| **L4** | 39 | 39 | 40 | 40 | 40 | 39 | 39 |
| **L5** | 39 | 39 | 39 | 42 | 42 | 42 | 42 |
| **L7** | 39 | 38 | 32 | 4 | 2 | 2 | 2 |
| **L8** | 39 | 37 | 35 | 4 | 2 | 2 | 2 |
| **L9** | 39 | 39 | 40 | 40 | 40 | 40 | 40 |
| **L10** | 39 | 37 | 29 | 12 | 11 | 11 | 10 |
| **L11** | 39 | 38 | 37 | 23 | 17 | 14 | 13 |
| **L12** | 39 | 39 | 38 | 36 | 34 | 24 | 19 |

Ces essais montrent que le gasoil comme l'additif commercial L4 n'ont aucune efficacité lubrifiante. L'additif L3 ne fonctionne qu'à forte concentration (à partir de 4%). Les deux esters seuls (L1 et L9) ne sont pas efficaces. Par contre, on observe une efficacité supérieure lorsqu'ils sont associés à l'acide, les meilleurs résultats étant obtenus avec le monooléate de pentaérythritol. Une concentration d'acide Radiacid 208 comprise entre 10 et 15% donne d'excellents résultats. Cependant, il peut ne pas être souhaitable d'augmenter trop fortement la concentration en acide qui peut augmenter le risque de corrosion.

### Exemple 9: Formulation KCl/PHPA (polyacrylamide)

Composition du fluide de base:
- eau douce
- bentonite du Wyoming 30 g/l
- PHPA (IDCAP) 3 g/l
- réducteur de filtrat (AQUAPAC Reg) 1 g/l
- KCl 50 g/l
- NaOH tel que pH=9

Le produit AQUAPAC est commercialisé par la société AQUALON et le PHPA est un polyacrylamide de marque IDCAP commercialisé par la société Dowell Drilling Fluids.

Sont comparées dans cet exemple les performances lubrifiantes du gasoil (L5), de deux lubrifiants commerciaux classiques (L3 et L4), et du système L7.

| | **Lecture du couple** | | | | | | |
|---|---|---|---|---|---|---|---|
| **Systèmes (%)** | **0** | **0,5** | **1** | **2** | **3** | **4** | **5** |
| **L3** | 38 | 38 | 38 | 25 | 4 | 4 | 4 |
| **L4** | 38 | 38 | 38 | 33 | 31 | 31 | 30 |
| **L5** | 38 | 38 | 38 | 38 | 36 | 35 | 33 |
| **L7** | 38 | 36 | 31 | 10 | 2 | 2 | 2 |

Ces résultats montrent le très bon comportement lubrifiant du système L7.

### Exemple 10: Influence de l'addition d'un émulsifiant

Composition du fluide de base:
- eau douce
- bentonite du Wyoming 30 g/l
- Xanthane (IDVIS) 2 g/l
- réducteur de filtrat (AQUAPAC Reg) 1 g/l
- dispersant (Polyacrylate FP 305) 3 g/l
- CaCl₂ 50 g/l
- NaOH tel que pH=9

On compare dans cet exemple, les performances lubrifiantes du système L7, du système L13 et du système L14.

Les deux émulsifiants du commerce sont des tensioactifs utilisés pour stabiliser des émulsions.

| | **Lecture du couple** | | |
|---|---|---|---|
| Fluide de base | 42 | | |
| **Systèmes** | **L7** | **L13** | **L14** |
| (%) | | | |
| 0,5 | 32 | 32 | 33 |
| 1 | 6 | 7 | 6 |
| 2 | 2 | 2 | 2 |
| 3 | 2 | 2 | 2 |
| 4 | 2 | 2 | 2 |
| 5 | 2 | 2 | 2 |

Les mesures suivantes ont été effectuées après alourdissement de la formulation par de la baryte pour obtenir une densité de 1,4.

| | **Lecture du couple** | | |
|---|---|---|---|
| Fluide de base | 42 | | |
| **Systèmes** | **L7** | **L13** | **L14** |
| (%) | | | |
| 0,5 | 38 | 38 | 37 |
| 1 | 32 | 33 | 32 |
| 2 | 29 | 29 | 28 |
| 3 | 2 | 2 | 2 |
| 4 | 2 | 2 | 2 |
| 5 | 2 | 2 | 2 |

Dans les deux cas, fluide non alourdi ou alourdi, l'addition d'émulsifiant ne modifie pas la capacité lubrifiante de la composition selon l'invention.

### Exemple 11: Influence de l'addition d'un émulsifiant dans une formulation haute pression/haute température

La composition du fluide de base est la même que celle de l'exemple 8.

| | **Lecture du couple** | | |
|---|---|---|---|
| Fluide de base | 39 | | |
| **Systèmes** | **L7** | **L13** | **L14** |
| (%) | | | |
| 0,5 | 38 | 37 | 37 |
| 1 | 32 | 31 | 31 |
| 2 | 4 | 5 | 4 |
| 3 | 2 | 2 | 2 |
| 4 | 2 | 2 | 2 |
| 5 | 2 | 2 | 2 |

L'addition d'un émulsifiant ne modifie pas la capacité lubrifiante.

### Exemple 12: Influence de l'addition d'un système lubrifiant sur les propriétés rhéologiques et de filtration

La composition du fluide de base FB₁ est celle de l'exemple 10.

On compare dans cet exemple, les viscosités apparente VA et plastique VP en mPa.s, la contrainte seuil YV (Yield Value) en Pa (on multipliera par 2,0886 pour obtenir YV en lb/100ft²), le filtrat API en millilitre (ml), du fluide de base FB, du système L13 et du système L14.

Les systèmes L13 et L14 on été mélangés au fluide de base dans la proportion de 2% pour les mesures suivantes.

| **Systèmes** | **FB**_{**1**} | **L13** | **L14** |
|---|---|---|---|
| **VA** | 17 | 17 | 16 |
| **VP** | 15 | 15 | 14 |
| **YV** | 1,9 | 1,9 | 1,9 |
| **API filtrat** | 19,6 | 13 | 13,6 |

Les mesures suivantes ont été effectuées après alourdissement de la formulation par de la baryte pour obtenir une densité de 1,4. Les systèmes L13 et L14 on été mélangés au fluide de base dans la proportion de 3%.

| **Systèmes** | **FB**_{**1**} | **L13** | **L14** |
|---|---|---|---|
| **VA** | 30 | 26 | 27 |
| **VP** | 18 | 16 | 16 |
| **YV** | 11,5 | 9,6 | 10,5 |
| **API filtrat** | 37,4 | 17,2 | 18,2 |

On remarque que la composition lubrifiante ne modifie pas la rhéologie du fluide de base, alourdi ou non. Par contre, le filtrat est nettement amélioré dans les deux cas.

### Exemple 13: Etude du collage par pression différentielle

Les essais consistent à mesurer la friction entre le cake obtenu par filtration du fluide et un piston métallique qui simule un train de tige. On utilise pour les essais le "Differential Sticking Tester-Model 21150" de Baroid Div of NL Corp (Instruction Manual Part No.211510001EA).

Les conditions opérationnelles sont les suivantes : température ambiante du fluide, pression différentielle de filtration 3,5 MPa, pression sur le disque équivalente à 5 MPa, pendant 10 minutes.

Composition du fluide de base FB₂:
- eau douce
- bentonite du Wyoming 30 g/l
- réducteur de filtrat (AQUAPAC Reg) 1 g/l
- NaCI 1 g/l
- Baryte tel que d=1,2

La référence FB₂ correspond à la formulation de base. Les différents systèmes de lubrifiants qui ont été testés sont : L5, L3, L4, L1 et L2.

| **Formulations** | **Couple** | |
|---|---|---|
| | **(m.N)** | **(in.lbs)** |
| FB₂ | 31,6 | 280 |
| FB₂+ 1% L5 | 21,5 | 190 |
| FB₂+ 2% L5 | 13,6 | 120 |
| FB₂+ 1% L3 | 9 | 80 |
| FB₂+ 2% L3 | 8 | 70 |
| FB₂+ 1% L4 | 11,3 | 100 |
| FB₂+ 2% L4 | 6,8 | 60 |
| FB₂+ 1% L1 | 5,6 | 50 |
| FB₂+ 2% L1 | Pas de collage | |
| FB₂+ 1% L2 | 4,5 | 40 |
| FB₂+ 2% L2 | Pas de collage | |

Il est clair que même la composition L1 (ester seul) est plus efficace, à quantité égale, que les produits conventionnels. La composition optimisée L2 présente d'excellentes caractéristiques d'anti collage par pression différentielle.

### Exemple 14: Fluide sans argile réactive

Composition du fluide de base:
- eau douce
- Xanthane (IDVIS) 4 g/l
- réducteur de filtrat (AQUAPAC Reg) 10 g/l
- KCl 50 g/l
- Baryte 30 g/l

| | Lecture du couple | | | | |
|---|---|---|---|---|---|
| **Systèmes (%)** | **0** | **0,5** | **1** | **2** | **3** |
| **L13** | 32 | 2 | **1** | **1** | **1** |
| **L3** | 32 | 6 | 5 | 5 | 5 |
| **L4** | 32 | 12 | 9 | 8 | 8 |
| **L7** | 32 | 2 | **1** | **1** | **1** |

Ces résultats montrent que même dans une formulation de fluide sans argile gonflante (ou réactive), formulation dite "sans solide" le pouvoir lubrifiant de la composition selon la présente invention, sous la forme L13 ou L7, est excellent par rapport aux lubrifiants du commerce.

Un essai a été réalisé avec le même fluide de base, mais sans baryte, avec la composition L13 :

| | **Lecture du couple** | | | | |
|---|---|---|---|---|---|
| **Systèmes (%)** | **0** | **0,5** | **1** | **2** | **3** |
| **L13** | 32 | 3 | 2 | 2 | 2 |

### Exemple 15: Influence du vieillissement en température

Composition du fluide de base:
- eau douce
- bentonite du Wyoming 30 g/l
- NaCl 1 g/l

On ajoute à cette formulation de base très simple 3% de composition lubrifiante L7 ou L13. Deux échantillons de fluide ont été chauffés à 140°C et à 150°C dans une cellule de test dit "Hot rolling", pendant 16 heures. Après retour à la température ambiante (environ 25°C), les échantillons de fluide ont été testés pour leur pouvoir lubrifiant dans le "lubricity tester" selon les essais précédents :

| | **25°C** | **140°C** | **150°C** |
|---|---|---|---|
| **L7** | 1 | 1 | 1 |
| **L13** | 1 | 1 | 1 |

Cet essai confirme l'excellente tenue en température du système lubrifiant selon l'invention.

## Revendications

1. Composition lubrifiante pour fluide de puits à base d'eau, **caractérisée en ce qu'**elle comporte :
- de 50% à 99% en poids d'une partie A constituée par un ou plusieurs esters obtenus par réaction d'un acide monocarboxylique (A.1), linéaire ou branché, comprenant de 8 à 24 atomes de carbone et d'un polyol (A.2), linéaire ou branché, comprenant de 2 à 20 atomes de carbone, le rapport molaire acide : alcool (A.1 : A.2) est compris entre 1 : 1 et (n-n/10) : 1, où n représente le nombre de groupement hydroxyle de l'alcool A.2,
- de 1 à 50% en poids d'une partie B constituée d'un ou plusieurs acides monocarboxyliques, linéaires ou branchés, comprenant de 8 à 24 atomes de carbone, et en ce que l'acide carboxylique (A.1 et partie B) possède 1 à 3 insaturations.

2. Composition selon la revendication 1, **caractérisée en ce que** l'acide carboxylique (A.1 et partie B) comprend 14 à 20 atomes de carbone.

3. Composition selon l'une des revendications précédentes, **caractérisée en ce que** ledit polyol A.2 possède 2 à 5 groupements hydroxyles et comprend de 2 à 6 atomes de carbone.

4. Composition selon l'une des revendications précédentes, **caractérisée en ce que** ledit acide monocarboxylique (A.1 et partie B) est choisi parmi le groupe constitué par l'acide oléique, stéarique, linoléique, linolénique, palmitique, palmitoléique, myristique et leur mélange.

5. Composition selon l'une des revendications précédentes, **caractérisée en ce que** ledit acide monocarboxylique (A.1 et partie B) contient environ 70 % d'acide oléique, 10 % d'acide linoléique, 6 % d'acide palmitoléique, 5 % d'acide palmitique, 4 % d'acide myristique, 3% d'acide linolénique et 2 % d'acide stéarique.

6. Composition selon l'une des revendications précédentes, **caractérisée en ce que** le rapport molaire acide : alcool (A.1 : A.2) est compris entre (1+n/10) : 1 et (n-n/5) : 1, où n représente le nombre de groupement hydroxyle de l'alcool A.2.

7. Composition selon l'une des revendications précédentes, **caractérisée en ce qu'**elle comporte entre 80 et 95% d'ester A, préférentiellement environ 90%.

8. Composition selon l'une des revendications précédentes, **caractérisée en ce qu'**elle comporte en outre au plus 10% d'amine tertiaire.

9. Composition selon la revendication 8, **caractérisée en ce que** ladite amine tertiaire est une triéthanolamine.

10. Composition selon l'une des revendications 8 ou 9, **caractérisée en ce que** ladite amine est en quantité comprise entre 0,2 et 1,2 exprimée en équivalents molaire par rapport à l'acide B.

11. Composition selon l'une des revendications 8 à 10, **caractérisée en ce que** la partie ester A, la partie acide B et la triéthanolamine sont respectivement dans les proportions en poids suivantes : environ 85,4%, 9,5% et 5,1%.

12. Composition selon l'une des revendications précédentes, **caractérisée en ce qu'**elle comporte un produit émulsifiant dans une proportion au plus égale à 2% en poids par rapport à ladite composition.

13. Composition selon la revendication 12, **caractérisée en ce que** le produit émulsifiant est choisi dans le groupe formé par le Monolaurate de sorbitan éthoxylé à 20 moles et le Monooléate de polyéthylène glycol de masse moléculaire 600.

14. Utilisation de la composition selon l'une des revendications 1 à 13 pour le contrôle de la capacité lubrifiante d'un fluide de puits à base d'eau.

15. Utilisation selon la revendication 14, **caractérisée en ce que** la quantité ajoutée de ladite composition est comprise entre environ 0,1% et 10%, par rapport au fluide.

16. Utilisation selon l'une des revendications 14 ou 15, dans lequel le fluide de puits est un fluide très peu chargé en solides réactifs, **caractérisée en ce que** la quantité ajoutée de ladite composition est comprise entre environ 1% et 3%, par rapport au fluide.

17. Utilisation selon l'une des revendications 14 ou 15, dans lequel le fluide est chargé en solides, **caractérisée en ce que** la quantité ajoutée de ladite composition est comprise entre environ 3% et 5%, par rapport au fluide.

18. Fluide de puits à base d'eau comprenant entre 0,1 et 10%, préférentiellement entre 1 et 5% en poids d'une composition lubrifiante telle que définie dans l'une des revendications 1 à 13.

## Patentansprüche

1. Schmiermittelzusammensetzung für Bohrlochfluide auf Wasserbasis, **dadurch gekennzeichnet, dass** sie umfasst:
- 50 Gew.-% bis 90 Gew.-% eines Teils A, der durch einen oder mehrere Ester gebildet wird, die durch Reaktion einer linearen oder verzweigten Monocarboxylsäure (A.1), die 8 bis 24 Kohlenstoffatome umfasst und eines linearen oder verzweigten Polyols (A.2), das 2 bis 20 Kohlenstoffatome umfasst, erhalten werden, wobei das molare Verhältnis Säure : Alkohol (A.1 : A.2) zwischen 1 : 1 und (n-n/10):1 ist, wobei n die Anzahl von Hydroxylgruppen des Alkohols A.2 darstellt.
- 1 bis 50 Gew.-% eines Teils B, der aus einer oder mehreren linearen oder verzweigten Monocarboxylsäuren, die 8 bis 24 Kohlenstoffatome umfassen, gebildet ist und dadurch, dass die Carboxylsäure (A.1 und Teil B) 1 bis 3 Unsättigungen aufweist.

2. Zusammensetzung nach Anspruch 1, **dadurch gekennzeichnet, dass** die Carboxylsäure (A.1 und Teil B) 14 bis 20 Kohlenstoffatome umfasst.

3. Zusammensetzung nach einem der vorhergehenden Ansprüche, **dadurch gekennzeichnet, dass** das Polyol A.2 2 bis 5 Hydroxylgruppen aufweist und 2 bis 6 Kohlenstoffatome umfasst.

4. Zusammensetzung nach einem der vorhergehenden Ansprüche, **dadurch gekennzeichnet, dass** die Monocarboxylsäure (A.1 und Teil B) in der Gruppe gewählt wird, die durch Oleinsäure, Stearinsäure, Linolsäure, Linolensäure, Palmitinsäure, Palmitolensäure, Myristinsäure und deren Mischung gebildet ist.

5. Zusammensetzung nach einem der vorhergehenden Ansprüche, **dadurch gekennzeichnet, dass** die Monocarboxylsäure (A.1 und Teil B) etwa 70% Oleinsäure, 10% Linolsäure, 6% Palmitolensäure, 5% Palmitinsäure, 4% Myristinsäure, 3% Linolensäure und 2% Stearinsäure enthält.

6. Zusammensetzung nach einem der vorhergehenden Ansprüche , **dadurch gekennzeichnet, dass** das molare Verhältnis Säure : Alkohol (A1.: A.2) zwischen (1+n/10):1 und (n-n/5):1 liegt, wobei n die Anzahl von Hydroxylgruppen des Alkohols A.2 darstellt.

7. Zusammensetzung nach einem der vorhergehenden Ansprüche, **dadurch gekennzeichnet, dass** sie zwischen 80 und 95%, vorzugsweise etwa 90% Ester A umfasst.

8. Zusammensetzung nach einem der vorhergehenden Ansprüche, **dadurch gekennzeichnet, dass** sie im übrigen höchstens 10% tertiäres Amin umfasst.

9. Zusammensetzung nach Anspruch 8, **dadurch gekennzeichnet, dass** das tertiäre Amin ein Triethanolamin ist.

10. Zusammensetzung nach einem der Ansprüche 8 oder 9, **dadurch gekennzeichnet, dass** das Amin in einer Menge zwischen 0,2 und 1,2, ausgedrückt in molaren Äquivalenten bezüglich der Säure B vorliegt.

11. Zusammensetzung nach einem der Ansprüche 8 bis 10, **dadurch gekennzeichnet, dass** der Esterteil A und der Säureteil B und das Triethanolamin jeweils in folgenden Gewichtsanteilen vorliegen: etwa 85,4%, 9,5% und 5,1%.

12. Zusammensetzung nach einem der vorhergehenden Ansprüche, **dadurch gekennzeichnet, dass** sie ein Emulgierproduktes in einem Anteil von höchstens gleich 2 Gew.-% bezüglich dieser Zusammensetzung umfasst.

13. Zusammensetzung nach Anspruch 12, **dadurch gekennzeichnet, dass** das Emulgierprodukt aus der durch Monolaureat von ethoxyliertem Sorbitan bei 20 mol und Monooleat von Polyethylenclycol einer Molekularmasse von 600 gebildeten Gruppe gewählt ist.

14. Verwendung der Zusammensetzung nach einem der Ansprüche 1 bis 13 für die Regelung des Schmiervermögens eines Bohrlochfluids auf Wasserbasis.

15. Verwendung nach Anspruch 14, **dadurch gekennzeichnet, dass** die dieser Zusammensetzung zugegebene Menge zwischen etwa 0,1 und 10% bezogen auf das Fluid liegt.

16. Verwendung nach einem der Ansprüche 14 oder 15, bei der das Bohrlochfluid für ein kaum mit reaktiven Feststoffen beladenes Fluid ist, **dadurch gekennzeichnet, dass** die dieser Zusammensetzung zugebene Menge zwischen etwa 1% und 3% bezogen auf das Fluid ist.

17. Verwendung nach einem der Ansprüche 14 oder 15, in der das Fluid mit Feststoffen beladen ist, **dadurch gekennzeichnet, dass** die dieser Zusammensetzung zugebene Menge zwischen etwa 3% und etwa 5% bezogen auf das Fluid liegt.

18. Bohrlochfluid auf Wasserbasis, das zwischen 0,1 und 10 Gew.-%, vorzugsweise zwischen 1 und 5 Gew.-% einer wie in den Ansprüchen 1 bis 13 bestimmten Schmiermittelzusammensetzung umfasst.

## Claims

1. Lubricating composition for water-based well fluid, **characterised in that** it comprises:
- 50% to 99% by weight of a portion A constituted by one or more esters obtained through reaction of a linear or branched monocarboxylic acid (A.1) comprising 8 to 24 atoms of carbon, and of a linear or branched polyalcohol (A.2) comprising 2 to 20 atoms of carbon, the acid : alcohol molar ratio (A.1 : A.2) lying between 1 : 1 and (n-n/10) : 1, in which n represents the number of hydroxyl groups of the alcohol A.2,
- 1 to 50% by weights of a portion B constituted by one or more linear or branched monocarboxylic acids comprising 8 to 24 atoms of carbon, and in that the carboxylic acid (A.1 and portion B) possesses 1 to 3 unsaturations.

2. Composition according to claim 1, **characterised in that** the carboxylic acid (A.1 and portion B) comprises 14 to 20 atoms of carbon.

3. Composition according to one of the preceding claims, **characterised in that** said polyalcohol (A.2) possesses 2 to 5 hydroxyl groups and comprises 2 to 6 atoms of carbon.

4. Composition according to one of the preceding claims, **characterised in that** said monocarboxylic acid (A.1 and portion B) is chosen from the group constituted by oleic, stearic, linoleic, linolenic, palmitic, palmitoleic and myristic acid and mixtures thereof.

5. Composition according to one of the preceding claims, **characterised in that** said monocarboxylic acid (A.1 and portion B) contains approximately 70% oleic acid, 10% linoleic acid, 6% palmitoleic acid, 5% palmitic acid, 4% myristic acid, 3% linolenic acid and 2% stearic acid.

6. Composition according to one of the preceding claims, **characterised in that** the acid : alcohol molar ratio (A.1 : A.2) lies between (1+n/10) : 1 and (n-n/5) : 1, in which n represents the number of hydroxyl groups of the alcohol A.2.

7. Composition according to one of the preceding claims, **characterised in that** it comprises between 80 and 95% of ester A, preferably approximately 90%.

8. Composition according to one of the preceding claims, **characterised in that** it additionally comprises at most 10% tertiary amine.

9. Composition according to claim 8, **characterised in that** said tertiary amine is a triethanolamine.

10. Composition according to one of claims 8 or 9, **characterised in that** said amine is present in a quantity of between 0.2 and 1.2 expressed in molar equivalents in relation to the acid B.

11. Composition according to one of claims 8 to 10, **characterised in that** the ester A portion, the acid B portion and the triethanolamine are respectively present in the following proportions by weight: approximately 85.4%, 9.5% and 5.1%.

12. Composition according to one of the preceding claims, **characterised in that** it comprises an emulsifying product in a proportion at most equal to 2% by weight in relation to said composition.

13. Composition according to claim 12, **characterised in that** the emulsifying product is chosen from the group formed by sorbitan monolaurate ethoxylated at 20 moles and polyethylene glycol monooleate with a molecular mass of 600.

14. Use of the composition according to one of claims 1 to 13 for controlling the lubricating capacity of a water-based well fluid.

15. Use according to claim 14, **characterised in that** the added quantity of said composition lies between approximately 0.1% and 10% in relation to the fluid.

16. Use according to one of claims 14 or 15, in which the well fluid is a fluid with a very small load of reactive solids, **characterised in that** the added quantity of said composition lies between approximately 1% and 3% in relation to the fluid.

17. Use according to one of claims 14 or 15, in which the fluid is laden with solids, **characterised in that** the added quantity of said composition lies between approximately 3% and 5% in relation to the fluid.

18. Water-based well fluid comprising between 0.1 and 10%, preferably between 1 and 5% by weight of a lubricating composition as defined in one of claims 1 to 13.
